# EUROPÄISCHE PATENTANMELDUNG

(11) **EP 2 221 472 A2**
(43) Veröffentlichungstag der Anmeldung: **25.08.2010**
(21) Anmeldenummer: 10005775.1
(22) Anmeldetag: 22.07.2008
(51) Int. Cl.: F03B 17/06, F03D 1/02

(54) **Vorrichtung zur Erzeugung von Energie aus einer Fluidströmung**

(30) Priorität: 25.07.2007 DE 102007034618
(62) Teilanmeldung aus: 08784959.2
(71) Anmelder: Hamann, Georg, 83259 Schleching (DE)
(72) Erfinder: Hamann, Georg, 83259 Schleching (DE)
(74) Vertreter: Reinhardt, Markus

(57) **Zusammenfassung**

Ein Gehäuse für eine Anlage zur Erzeugung von Energie aus einer Fluidströmung ist in Segmente unterteilt, die mittels lösbarer Befestigungsmittel aneinander fixiert sind. Diese Segmente sind vorzugsweise zylindermantelsegementflächenförmig ausgebildet und mittels jeweils eines Verbindungsprofils (3) und am Umfang der Segmente vorgesehenen Flanschen bzw. Rändern aneinander einfach zu befestigen und wieder zu lösen. Im Detail umfasst das erfindungsgemäße Gehäuse einer Anlage (1) zur Erzeugung von Energie aus einer durch die Anlage geleiteten Fluidströmung, wobei eine Mehrzahl von Schaufeln (5, 5') entlang einer Antriebswelle (6) der Anlage jeweils axial und radial zueinander beabstandet innerhalb des Gehäuses angeordnet ist, eine Mehrzahl von zylindermantelsegmentflächenförmigen Abschnitten, die mittels lösbarer Befestigungsmittel aneinander fixiert sind, wobei jeweils zwei die zylindermantelsegmentflächenförmigen Abschnitte ausbildenden Rohrsegmente (3) mittels eines Verbindungsprofils (3) miteinander derart verbunden sind, dass die Verbindungsprofile am Umfang des Gehäuses im Abstand von 120° oder 90° vorgesehen sind, wobei die Kanten der Rohrsegmente (2) beidseitig an einem Rand (37) und jeweils mit dem Verbindungsprofil (3) durch eine Verschraubung (34) festgelegt sind.

## Beschreibung

Die vorliegende Erfindung betrifft ganz allgemein ein Gehäuse für eine Anlage zur Erzeugung von Energie aus einer durch die Anlage geleiteten Fluidströmung nach dem Oberbegriff des Patentanspruchs 1.

Bekannte Vorrichtungen zur Erzeugung von Energie aus einer Fluidströmung sind beispielsweise offenbart in der US-PS-1,407,314. Dort sind Schaufeln, die vom anströmenden Fluid in Drehung um eine Antriebswelle versetzt werden, feststehend und in einem zylinderförmigen Gehäuse eingeschlossen mit der Antriebswelle verbunden.

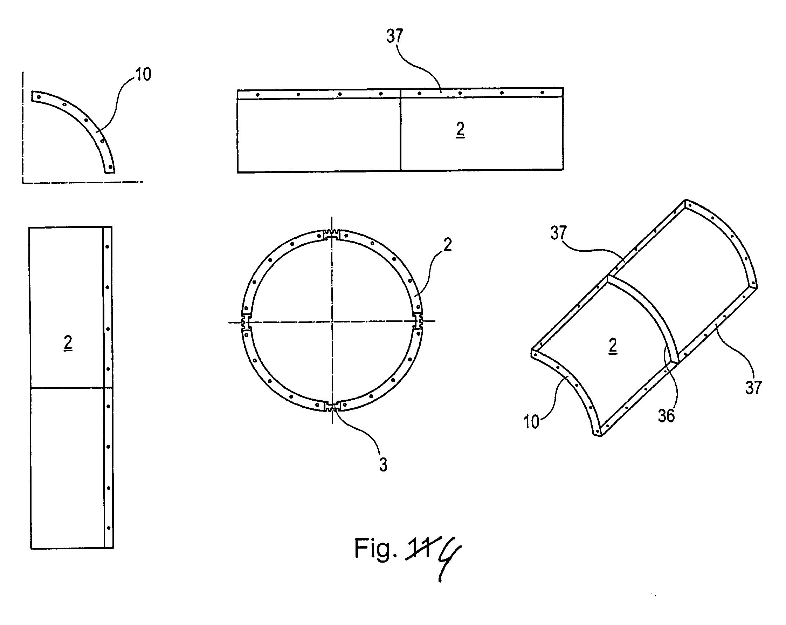

Aus der WO 2007/044128 A2 ist ein Gehäuse für eine solche Vorrichtung bekannt, die aus zylindermantelsegmentförmigen Abschnitten besteht, die aneinander verschraubt (siehe dort Figur 4) werden. Allerdings gestaltet sich diese Verschraubung als wartungsunfreundlich und für den Fall, dass eine der Schaufeln der Vorrichtung zu justieren wäre oder gar zu ersetzen wäre, sind aufwändige Montagearbeiten erforderlich, um das Gehäuse abzubauen.

Auch aus der US 1,462,890 oder der WO 2006/028377 A1 sind Gehäuse für Turbinen bekannt, die aus Segmenten bestehen. Allerdings lassen sich diese Gehäuse nicht auf die erfindungsgemäße Vorrichtung übertragen und sind jeweils zylinderförmig aufgebaut.

Die Aufgabe der vorliegenden Erfindung ist es, die gesamte Vorrichtung zur Erzeugung von Energie aus der Fluidströmung so wartungsfreundlich wie möglich zu gestalten. Das steht auch im Einklang mit dem weiteren Ziel, welches unter anderem die einfache Austauschbarkeit der Schaufeln nennt.

Diese Aufgabe und dieses Ziel werden erreicht durch ein Gehäuse nach Patentanspruch 1. Dazu ist das Gehäuse in Segmente unterteilt, die mittels lösbarer Befestigungsmittel aneinander fixiert sind. Diese Segmente sind vorzugsweise zylindermantelsegementflächenförmig ausgebildet und mittels jeweils eines Verbindungsprofils und am Umfang der Segmente vorgesehenen Flanschen bzw. Rändern aneinander einfach zu befestigen und wieder zu lösen. Im Detail umfasst das erfindungsgemäße Gehäuse einer Anlage zur Erzeugung von Energie aus einer durch die Anlage geleiteten Fluidströmung, wobei eine Mehrzahl von Schaufeln entlang einer Antriebswelle der Anlage jeweils axial und radial zueinander beabstandet innerhalb des Gehäuses angeordnet ist, eine Mehrzahl von zylindermantelsegmentflächenförmigen Abschnitten, die mittels lösbarer Befestigungsmittel aneinander fixiert sind, wobei jeweils zwei die zylindermantelsegmentflächenförmigen Abschnitte ausbildenden Rohrsegmente mittels eines Verbindungsprofils miteinander derart verbunden sind, dass die Verbindungsprofile am Umfang des Gehäuses im Abstand von 120° oder 90° vorgesehen sind, wobei die Kanten der Rohrsegmente beidseitig an einem Rand und jeweils mit dem Verbindungsprofil durch eine Verschraubung festgelegt sind.

Soll beispielsweise eine bestimmte Schaufel in der Vorrichtung getauscht oder repariert werden, muss lediglich eines dieser Rohrsegmente gelöst und entfernt werden, um einfach Zugang zu dieser Schaufel zu erhalten.

Vorzugsweise und wie in der detaillierten Beschreibung weiter unten noch ausgeführt werden wird, können die Segmente über den Umfang der Vorrichtung dreiteilig oder vierteilig vorgesehen werden.

Vorteilhafte Ausführungsformen des erfindungsgemäßen Gehäuses sind der Gegenstand der Unteransprüche 2 bis 7.

Die vorstehende Aufgabe, die Ziele, Merkmale und Vorteile nach der vorliegenden Erfindung können unter Berücksichtigung der folgenden, detaillierten Beschreibung der bevorzugten Ausführungsformen der vorliegenden Erfindung und unter Bezugnahme auf die zugehörigen Zeichnungen besser verstanden werden.

Die Erfindung wird im folgenden anhand der Zeichnungen näher erläutert. Diese zeigen in:
Fig. 1 eine schematische Darstellung eines Abschnittes der erfindungsgemäßen Anlage zur Erzeugung von Energie, wobei ein Teil eines Gehäuses der Anlage weg gelassen worden ist, um das Innere der Anlage zu zeigen;
Fig. 2 eine schematische Darstellung eines Abschnittes der erfindungsgemäβen Anlage zur Erzeugung von Energie, wobei diese perspektivische Ansicht einen Blick in das Innere der Anlage darstellt, um die Abstützung einer Antriebswelle in einem Gehäuse zu zeigen;
Fig. 3 eine vergrößerte perspektivische Ansicht eines Teils der Anlage nach der Figur 2, wobei die Schaufeln hier schematisch dargestellt sind und die Befestigung der Abstützung am Gehäuse gezeigt ist;
Fig. 4 mehrere Darstellungen eines Rohrsegments als Teil des Gehäuses der Anlage;
Fig. 5 eine schematische Darstellung der Anlage, die in einem Flußbett verankert ist, wobei Wasser durch die Anlage strömt;
Fig. 6 eine schematische Darstellung eines Abschnittes der erfindungsgemäβen Anlage zur Erzeugung von Energie, ähnlich der Figur 1, wobei ein Teil eines Gehäuses der Anlage weg gelassen worden ist, um das Innere der Anlage zu zeigen, allerdings mit einer über den Umfang des Gehäuses vorgesehenen Dreiteilung der Segmente;
Fig. 7 mehrere Darstellungen eines Verbindungsprofils als Teil des Gehäuses der Anlage, welches die Rohrsegmente in axialer Richtung miteinander verbindet;
Fig. 8 zwei Darstellungen einer Stütze, die die Antriebswelle der Anlage gegenüber dem Gehäuse abstützt;
Fig. 9 mehrere Darstellungen eines Nutensteines, der zur Verankerung bzw. Befestigung der Stütze nach der Figur 8 am Gehäuse bzw. dem Verbindungsprofil nach der Figur 7 dient;

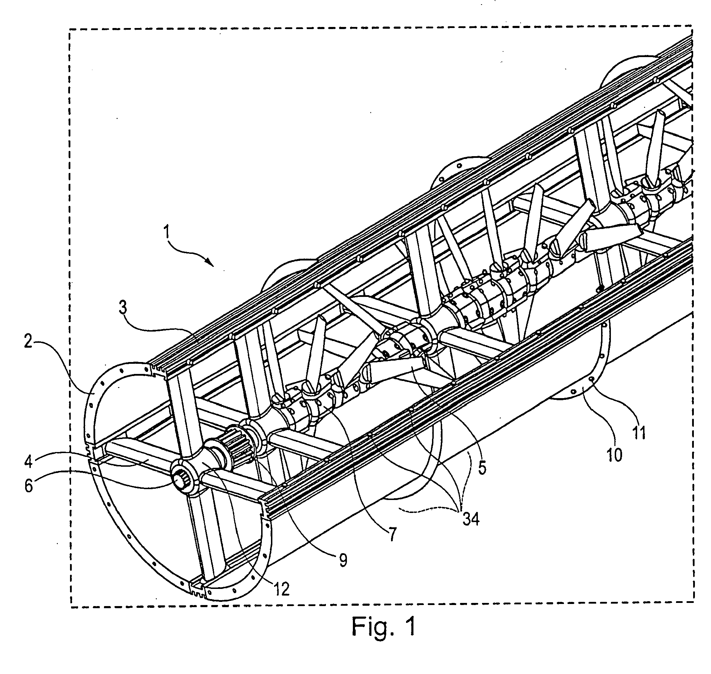

Gemäß einer bevorzugten Ausführungsform nach der vorliegenden Erfindung, die in der Figur 1 dargestellt ist, umfasst eine Anlage 1 zur Erzeugung von Energie aus einer durch die Anlage 1 in axialer Richtung geleiteten Fluidströmung ein rohrförmiges Gehäuse, welches aus einer Mehrzahl von Rohrsegmenten 2 besteht. In der gezeigten Ausführungsform sind jeweils vier Rohrsegmente 2, von denen sich jedes über 90° in Umfangsrichtung des Gehäuses erstreckt, mittels jeweils eines Verbindungsprofils 3 in axialer Richtung des Gehäuses aneinander befestigt. Vorzugsweise dient eine Mehrzahl von Schrauben als Befestigungsmittel zwischen jedem Rohrsegment 2 und jedem Verbindungsprofil 3. In der Figur 1 ist diese Verschraubung durch das Bezugszeichen 34 bezeichnet. Einzelheiten des Rohrsegments 2 und des Verbindungsprofils 3 werden weiter unten mit Bezug zu den Figuren 11 bis 14 noch beschrieben werden. Es sind also vier Rohrsegmente 2 und vier Verbindungsprofile 3 über den Umfang betrachtet nebeneinander angeordnet und aneinander befestigt, um das rohrföhrmige Gehäuse der Anlage 1 auszubilden.

In axialer Richtung des Gehäuses der Anlage 1 sind die Rohrsegmente 2 hintereinander geschaltet bzw. angeordnet und über jeweils einen Flansch 10 an jedem Rohrsegment 2 miteinander verbunden. Die beiden Flansche 10 zweier in axialer Richtung benachbarter Rohrsegmente 2 sind mittels einer Vielzahl von Schrauben 11 miteinander lösbar verbunden.

Die Anzahl der hintereinandergeschalteten Rohrsegmente 2 zur Ausbildung der Anlage 1 ist frei wählbar.

Die Anlage 1 wird in ein strömendes Fluid eingesetzt bzw. eingebaut, wie etwa in einen Fluß, so dass das strömende Wasser in axialer Richtung durch das zylindrische Gehäuse der Anlage 1 strömt und die in der Figur 1 dargestellten Schaufeln 5 in Drehung um eine Antriebswelle 6 versetzt.

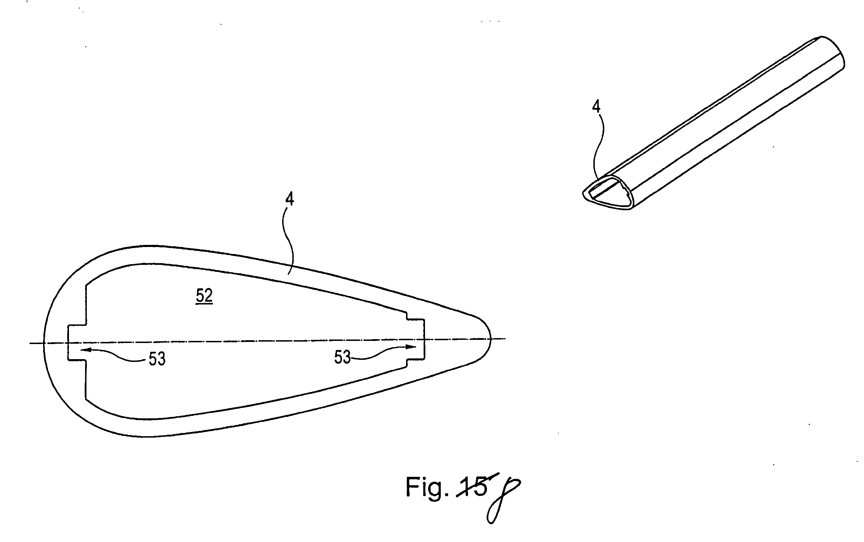

Die Antriebswelle 6 ist innerhalb des Gehäuses aus den Rohrsegmenten 2 mittig angeordnet und durch eine Vielzahl von Stützen 4 gegenüber dem Gehäuse abgestützt. Die Stützen 4 werden weiter unten und mit Bezug zu der Fig. 8 noch beschrieben werden. Die Stützen 4 sind jeweils an den Verbindungsprofilen 3 und damit radial außenliegend - mit Bezug zur Stütze - am Gehäuse der Anlage 1 lösbar befestigt, sowie die Stützen 4 radial innenliegend an einem Kugellagerkopf 12 befestigt sind, der jeweils mittels zumindest eines Kugellagers die Antriebswelle 6 trägt.

In der Figur 1 ist demnach, in radialer Richtung gesehen und ausgehend von der mittigen Antriebswelle 6, zuerst der Kugellagerkopf 12 vorgesehen, der sich mittels der Stützen 4 am Gehäuse der Anlage 1 abstützt. Die bisher genannten Bauteile sind im wesentlichen spielfrei aneinander montiert. Die Antriebswelle 6 kann sich in den mehreren Kugellagerköpfen 12, von denen in der Figur 1 vier Stück dargestellt sind, frei und möglichst reibungslos drehen.

Zwischen den Kugellagerköpfen 12 befinden sich die Schaufeln 5, die über Lagerschalen 7 mit der Antriebswelle 6 drehfest verbunden sind. Die Anzahl der Schaufeln 5 ist frei wählbar und an die Umgebungsbedingungen - d.h. die Fluidströmung - anpassbar. In der gezeigten Ausführungsform nach der Figur 1 sind jeweils 6 Paare von Schaufeln 5 zwischen zwei Kugellagerköpfen 12 eingebaut. Je nach Anforderung lassen sich eine frei wählbare Anzahl von Schaufeln 5 bwz. Schaufelpaaren zwischen je zwei Kugellagerköpfen 12 vorsehen.

Auch ist nicht notwendigerweise nur ein Schaufelpaar pro Lagerschalenpaar 7 vorzusehen. Über den Umfang verteilt wäre auch nur eine Schaufel, drei Schaufeln oder eine größere Anzahl von Schaufeln 5 denkbar. Als besonders vorteilhaft haben sich zwei oder drei Schaufeln 5 pro Lagerschalenpaar 7 über den Umfang verteilt herausgestellt.

Die Schaufeln 5 sind repellerartig ausgebildet. D.h., dass der Querschnitt des Profils jeder Schaufel 5 derart gewählt ist, dass eine maximale Entnahme der kinetischen Energie aus dem vorbei strömenden Fluid stattfindet und jede Schaufel 5 in Drehung um die Antriebswelle 6 durch das vorbei strömende Fluid versetzt wird.

In der Figur 1 ist ein Viertel des Gehäuses der Anlage 1 durch Weglassen einer Reihe von hintereinanderliegenden Rohrsegmente 2 offen dargestellt, so dass das Innere der Anlage 1 zu erkennen ist. Im Betrieb der Anlage 1 ist die fehlende Reihe der Rohrsegmente 2 selbstverständlich zu montieren und so das Gehäuse zu verschließen.

Schließlich ist in der Figur 1 noch ein Antriebswellenabtrieb 9 zu erkennen. An diesem Antriebswellenabtrieb 9 kann mittels eines Getriebes oder mittels eines Keilrippenriemens die Rotation der Antriebswelle 6 abgeleitet werden und einem Generator zur Erzeugung von elektrischer Energie zugeleitet werden. Alternativ kann die Rotation der Antriebswelle 6 auch direkt zum Antrieb einer anderen Maschine benutzt werden, wie beispielsweise einer Wasserpumpe, um Wasser aus einem Fluß oder See auf benachbarte Felder zu pumpen oder in Rohrleitungen zu pumpen.

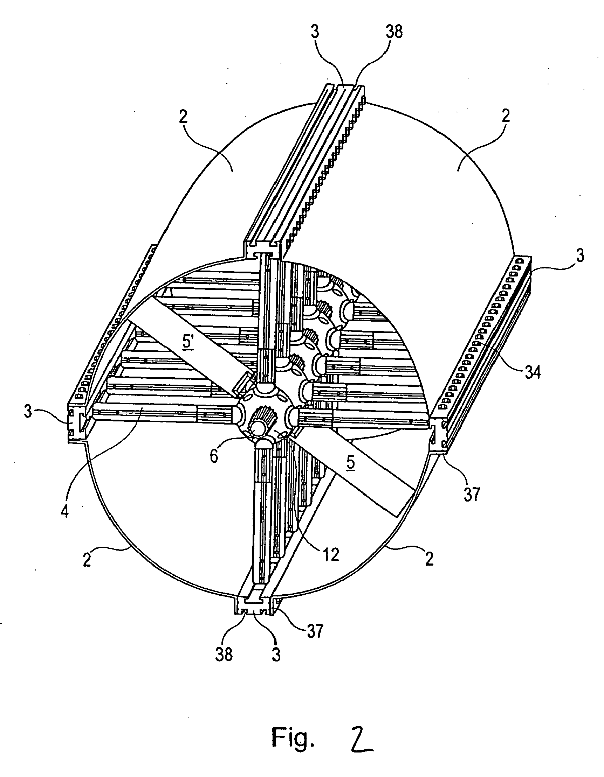

Unter Bezugnahme auf die Figur 2 ist dort schematisch die erfindungsgemäße Anlage 1 in einer bevorzugten Ausführungsform dargestellt, wobei vier Rohrsegmente 2 mittels der vier Verbindungsprofile 3 in Umfangsrichtung aneinander befestigt sind. Innerhalb des so entstandenen zylindrischen Gehäuses aus den Rohrsegmenten 2 befindet sich zentral angeordnet die axial verlaufende Antriebswelle 6, deren Außenverzahnung in der Figur 2 zu erkennen ist.

Auf dieser Antriebswelle 6 sind in axialer Richtung hintereinander jeweils die Kugellagerköpfe 12 angeordnet. In der schematischen Darstellung nach der Figur 2 sind 6 Kugellagerköpfe 12 zu erkennen, die im Abstand zueinander und hintereinander auf der Antriebswelle 6 montiert sind. In dem freiliegenden Abstand zwischen nebeneinanderliegenden Kugellagerköpfen 12 ist jeweils die Außenverzahnung der Antriebswelle 6 zu sehen. In dem ersten (vorne in der Figur 2) Abstand zwischen den ersten beiden Kugellagerköpfen 12 ist ein Paar von Lagerschalen montiert, an denen die Schaufeln 5 und 5 ' befestigt sind. Die Schaufeln 5 und 5' sind vereinfacht und lediglich schematisch in der Figur 2 dargestellt. Es ist jedoch gut zu erkennen, dass auf diese Art und Weise eine äußerst stabile Vorrichtung geschaffen wird, die sich durch eine Vielzahl von Stützen 4 auszeichnet, wobei die Stützen 4 jeweils zwischen den Kugellagerköpfen 12 und dem Gehäuse bzw. den Verbindungsprofilen 3 die Verbindung herstellen. An jedem Kugellagerkopf 12 sind in der gezeigten Ausführungsform vier Stützen 4 vorgesehen, die über den Umfang jeweils um 90° versetzt zueinander positioniert sind.

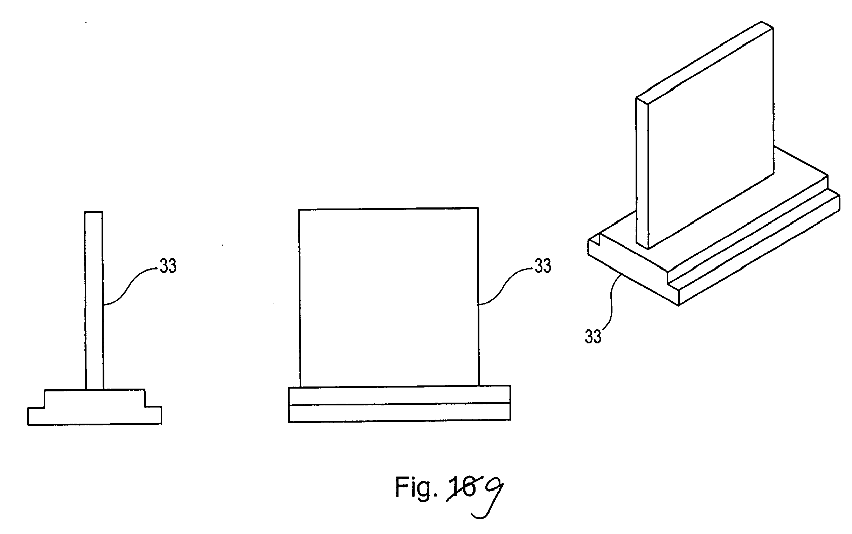

Die Stützen 4 greifen an den Kugellagerköpfen 12 in Fortsätze ein. Jedenfalls sind die Stützen 4 an den Kugellagerköpfen 12 spielfrei montiert. An den anderen Enden der Stützen 4, die am Verbindungsprofil 3 des Gehäuses montiert sind, dienen Nutensteine 33, die in der Figur 9 dargestellt sind, als Verbindungselement, um eine spielfreie Verbindung zwischen der Stütze 4 und dem Verbindungsprofil 3 herzustellen.

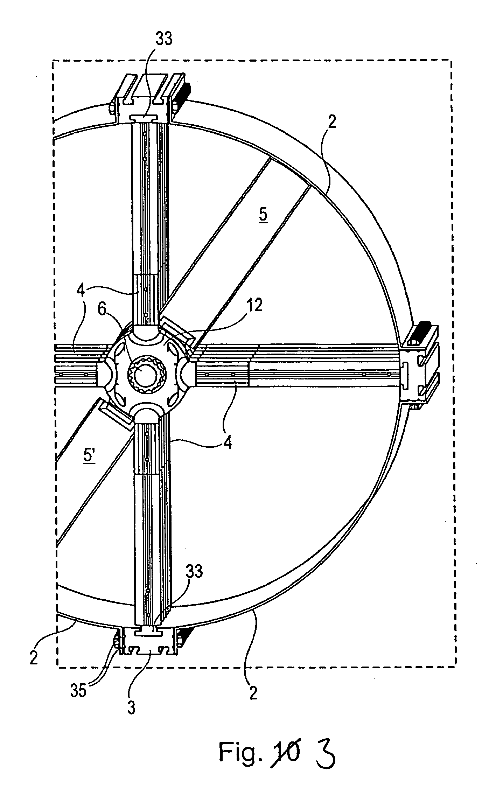

Der Querschnitt einer besonders bevorzugten Stütze 4 ist in der Figur 8 dargestellt, wobei jede Stütze 4 ein Profil aufweist, welches einen Hohlraum 52 hat, um Gewicht und Material und damit Kosten einzusparen, sowie die Außenform jeder Stütze 4, im Gegensatz zu der schematischen Darstellung in den Figuren 2 und 3, eine strömungsgünstige Gestaltung hat. Dem Fachmann ist klar, dass sich die Stütze 4 in einem strömenden Fluid befindet und für die Schaufeln 5 bzw. 5' nach der Figur 2 ein Hinderniss darstellt, da die Schaufel 5 und 5' die kinetische Strömungsenergie aus dem vorbeiströmenden Fluid entnehmen soll und in eine Drehung der Antriebswelle 6 umwandeln soll. Aus diesem Grund und um eine möglichst geringe Verwirbelung des anströmenden Fluids zu bewirken, ist die Stütze 4 nach der Figur 8 als Tragflächenprofil ausgebildet. Das spitze Ende der Stütze 4 weist dabei nach hinten (stromabwärts, in Strömungsrichtung des Fluids) und das runde, dickere Ende der Stütze 4 ist nach vorne (stromaufwärts) orientiert. Diese Einbaulage ist auch in der Figur 1 dargestellt.

Die Stützen 4 sind vorzugsweise aus Aluminium gefertigt und weisen eine Wandstärke auf, die die auftretenden Kräfte und Schwingungen zwischen Antriebswelle 6 und Gehäuse sicher übertragen und aufnehmen kann.

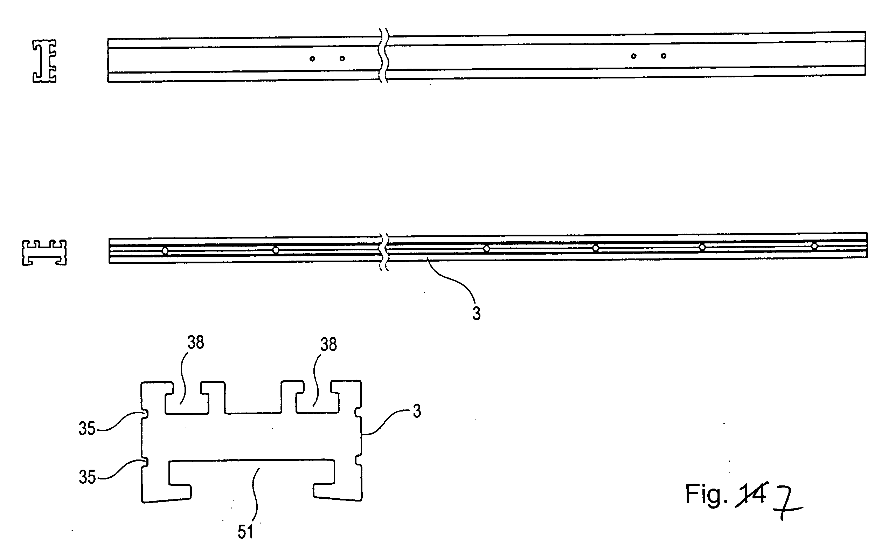

Ein Nutenstein 33, der zwischen jeder Stütze 4 und dem Verbindungsprofil 3 angeordnet ist, ist in der Figur 9 in mehreren Ansichten dargestellt. Das breite abgestufte Basisende des im Querschnitt im wesentlichen T-förmigen Nutensteines 33 wird in die Nut 51 des Verbindungsprofils 3 (siehe Figur 7) eingeführt. Mittels Schrauben (nicht dargestellt), die durch das Verbindungsprofil 3 von außen durch Gewindebohrungen eingeschraubt werden, werden die Nutensteine 33 nach der Positionierung in der Nut 51 fixiert, indem das Ende der Schraube mit dem Gewinde auf die breite Basisfläche des Nutensteins 33 drückt und diesen in der Nut 51 gegen die radial innenliegende Fläche (in der Figur 3) presst.

Das andere Ende des Nutensteines 33, welches als platten- bzw. quaderförmiger Fortsatz ausgebildet ist und welches sich in der Figur 9 nach oben erstreckt, greift in den Hohlraum 52 der Stütze 4 in dort ausgebildete kleine Vertiefungen 53 formschlüssig ein. Die Vertiefungen 53 weisen im Querschnitt eine rechteckige Form auf, die dem plattenförmigen Fortsatz des Nutensteines 33 entspricht und der Eingriff dazwischen ist im wesentlichen spielfrei.

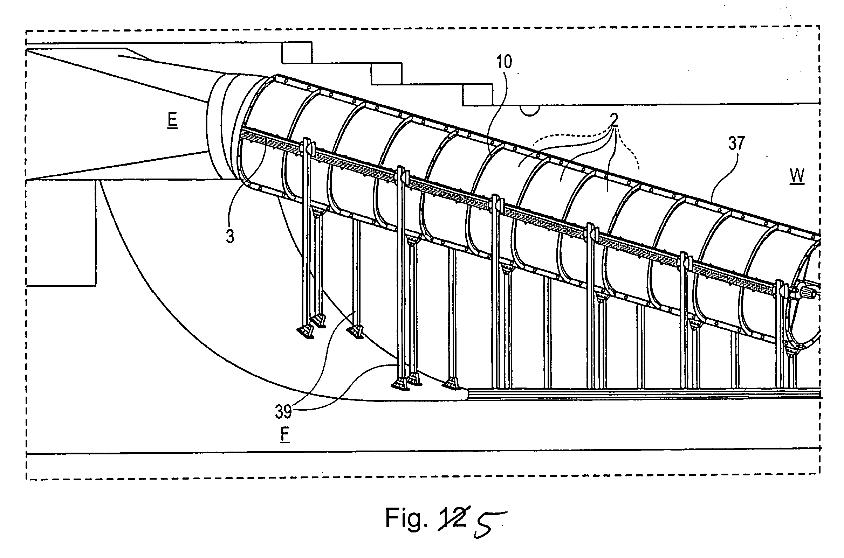

Ein vorteilhaftes Verbindungsprofil 3 zur Verbindung der Rohrsegemente 2 untereinander sowie zur Befestigung der Stützen 4 ist in der Figur 7 dargestellt. Dort ist in mehreren Ansichten ein erfindungsgemäßes Verbindungsprofil 3 gezeigt, wobei dieses Verbindungsprofil 3 vorzugsweise als Aluminiumstrangpreßteil ausgebildet und hergestellt ist. Die Nut 51 dient der Aufnahme des bzw. der Nutensteine 33 sowie die Nuten 38 der Aufnahme von kleineren Nutensteinen (nicht dargestellt) dienen. An den Nuten 38 werden Abstützmittel 39 mit den kleineren nicht dargestellten Nutensteinen auf ähnlich Art und Weise wie mit den Nutensteinen 33 die Stützen 4 fixiert sind, angebracht, um eine Anlage 1 beispielsweise mittels einer Vielzahl von Abstützmitteln 39 in einem Flußbett F zu verankern. Eine solche Verankerung ist beispielhaft in der Figur 5 dargestellt.

Über einen Einlauf E, der trichterförmig ausgebildet sein kann, wird das im Fluß strömende Wasser W in die Anlage 1 eingeleitet. Die Anlage 1 weist das Gehäuse aus den Rohrsegmenten 2 auf, die untereinander über die Flansche 10 und über die Ränder 37 miteinander verbunden sind. An den Verbindungsprofilen 3 sind die Abstützmittel 39 mit den kleineren und nicht dargestellten Nutensteinen befestigt. Die Abstützmittel 39 können im Flußbett auf übliche Art und Weise verankert sein.

An den Seiten der Verbindungsprofile 3 befinden sich kleine Nuten, die der Aufnahme von Dichtungen 35 dienen. Der Rand 37 (Figur 2) jedes Rohrsegments 2 wird mit dem Verbindungsprofil 3 mittels einer Verschraubung aus einer Vielzahl von Schrauben fest verbunden.

Jedes Rohrsegment 2 weist gemäß Figur 4, die eine besonders vorteilhafte Ausführungsform in mehreren Ansichten zeigt, in Umfangsrichtung einen Viertelbogen im Querschnitt auf, sowie - in axialer Richtung der Anlage 1 gesehen - einen Rand 37 an beiden Enden in Umfangsrichtung. An den Enden in axialer Richtung sind Flansche 10 vorgesehen. Mittels der Ränder 37 und der Flansche 10 werden mehrere Rohrsegmente 2 in Umfangsrichtung und in axialer Richtung der Anlage 1 aneinander befestigt. Hierzu sind Bohrungen in den Rändern 37 und in den Flanschen 10 ausgebildet (in der Figur 4 durch Punkte dargestellt), die von Schrauben durchgriffen werden. Zur Verstärkung jedes Rohrsegmentes 2 kann eine Verstärkungsrippe 36 ausgebildet werden. Vorzugsweise und wie in der Figur 4 in der mittigen Darstellung gezeigt, werden vier viertelbogenförmige Rohrsegmente 2 mittels vier Verbindungsprofilen 3 zu einem im Querschnitt kreisförmigen Gehäuseabschnitt der Anlage 1 zusammen gebaut. Solche im Querschnitt kreisförmigen Gehäuseabschnitte können hintereinander montiert werden, um die Anlage 1 in axialer Richtung zu verlängern.

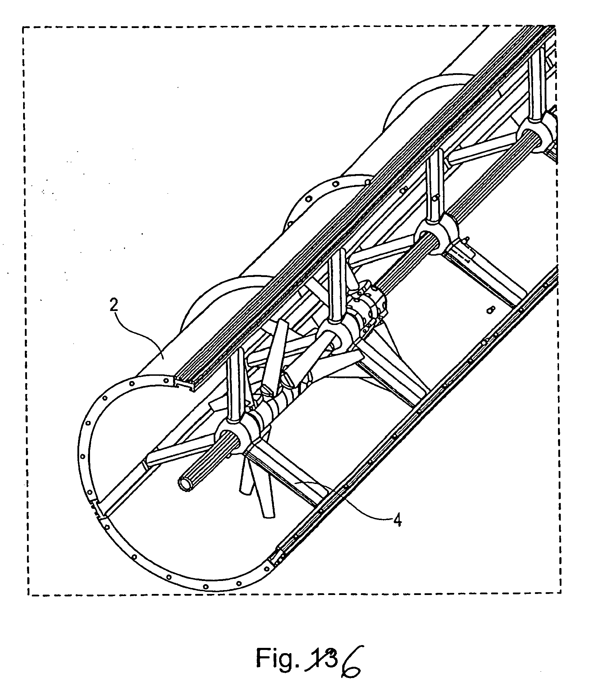

Die im Querschnitt kreisförmigen Gehäuseabschnitte können jedoch nach einer anderen bevorzugten Ausführungsform auch aus drei Rohrsegmenten 2 bestehen - dann erstreckt sich ein Rohrsegment 2 jeweils über 120° am Umfang des Gehäuses der Anlage 1. Eine solche Anlage ist in der Figur 6 dargestellt, wobei dann auch nur drei Stützen 4 über den Umfang verteilt zur Abstützung der Antriebswelle 6 vorgesehen sind. Hierdurch werden weniger Bauteile benötigt und die Kosten für die Fertigung der Bauteile können gesenkt werden. Ebenso wird der Aufwand für die Montage verringert, da weniger Bauteile aneinander zu montieren sind. Die Zugänglichkeit zum Inneren der Anlage 1 verbessert sich auch, da, wenn eines der Rohrsegmente 2 zu Wartungszwecken enfernt worden ist, der Zugang zum Inneren des Gehäuses größer ist als bei einem vierteiligen Gehäuse. Die Öffnung bei einem dreiteiligen Gehäuse (in Umfangsrichtung) beträgt 120° gegenüber lediglich 90° bei einem vierteiligen Gehäuse.

Schließlich ist noch ein weiterer Vorteil des erfindungsgemäßen Gehäuses nach der vorliegenden Erfindung festzuhalten: in die außenliegenden Nuten 38 der Verbindungsprofile 3 lassen sich beispielsweise Ösen (nicht dargestellt) einsetzen bzw. einschrauben, die bei der Fertigung, beim Transport oder dem Einbau vor Ort hilfreich sein können. Das Gehäuse bzw. die Anlage 1 kann zum Beispiel mittels dieser Ösen einfach angehoben und positioniert werden.

Hinsichtlich vorstehend im einzelnen nicht näher erläuterter Merkmale der Erfindung wird in übrigen ausdrücklich auf die sich anschließenden Patentansprüche und die zugehörigen Zeichnungen verwiesen.

### Bezugszeichenliste

- 1: Anlage
- 2: Rohrsegment
- 3: Verbindungsprofil
- 4: Stütze
- 5: Schaufel
- 5': Schaufel
- 6: Antriebswelle
- 7: Lagerschale
- 7': Lagerschale
- 9: Antriebswellenabtrieb
- 10: Flansch
- 11: Schraube
- 12: Kugellagerkopf

- 33: Nutenstein
- 34: Verschraubung
- 35: Dichtung
- 36: Verstärkungsrippe
- 37: Rand
- 38: Nut
- 39: Abstützmittel

- E: Einlauf
- F: Flußbett
- W: Wasser

## Patentansprüche

1. Gehäuse einer Anlage (1) zur Erzeugung von Energie aus einer durch die Anlage (1) geleiteten Fluidströmung, wobei eine Mehrzahl von Schaufeln (5, 5', ...) entlang einer Antriebswelle (6) der Anlage (1) jeweils axial und radial zueinander beabstandet innerhalb des Gehäuses angeordnet ist, wobei das Gehäuse aus einer Mehrzahl von zylindermantelsegmentflächenförmigen Abschnitten besteht, die mittels lösbarer Befestigungsmittel aneinander fixiert sind, **dadurch gekennzeichnet, dass** jeweils zwei die zylindermantelsegmentflächenförmigen Abschnitte ausbildenden Rohrsegmente (2) mittels eines Verbindungsprofils (3) miteinander derart verbunden sind, dass die Verbindungsprofile (3) am Umfang des Gehäuses im Abstand von 120° oder 90° vorgesehen sind, wobei die Kanten der Rohrsegmente (2) beidseitig an einem Rand (37) und jeweils mit dem Verbindungsprofil (3) durch eine Verschraubung (34) festgelegt sind.

2. Gehäuse nach Anspruch 1, **dadurch gekennzeichnet, dass** das Gehäuse aus drei oder vier identischen über den Umfang verteilten Rohrsegmenten (2) besteht, wobei solchermaßen erhaltene Gehäuseabschnitte in axialer Richtung in beliebiger Anzahl hintereinander anordenbar sind.

3. Gehäuse nach Anspruch 2, **dadurch gekennzeichnet, dass** die mehreren Gehäuseabschnitte mittels jeweils an den axialen Enden des Gehäuseabschnittes ausgebildeten Flanschen (10) miteinander verbunden sind.

4. Gehäuse nach einem der Ansprüche 1 bis 3, **dadurch gekennzeichnet, dass** zwischen jedem Verbindungsprofil (3) und jedem Rohrsegment (2) zumindest eine Dichtung (35) vorgesehen ist und/oder dass zwischen den Flanschen (10) jeweils eine Dichtung angeordnet ist.

5. Gehäuse nach einem der Ansprüche 1 bis 4, **dadurch gekennzeichnet, dass** jedes Rohrsegment (2) eine oder mehrere Verstärkungsrippen (36) aufweist.

6. Gehäuse nach einem der Ansprüche 1 bis 5, **dadurch gekennzeichnet, dass** das Verbindungsprofil (3) gehäuseinnenseitig eine axial verlaufende Nut zur Aufnahme von Nutensteinen (33) aufweist, so dass Stützen (4) dort mittels der Nutensteine (33) am Gehäuse verschiebbar und festlegbar sind.

7. Gehäuse nach einem der Ansprüche 1 bis 6, **dadurch gekennzeichnet, dass** das Verbindungsprofil (3) gehäuseaußenseitig zumindest eine axial verlaufende Nut aufweist, um Abstützmittel (39) dort zu befestigen, die eine Abstützung des Gehäuses relativ zu einem Flussbett (F), relativ zu einem Schwimmkörper oder dergleichen ermöglichen.
